(19) Europäisches Patentamt
European Patent Office
Office européen des brevets

(11) Publication number: **0 279 917 B1**

# (12) EUROPEAN PATENT SPECIFICATION

(45) Date of publication of patent specification: **22.01.92**

(51) Int. Cl.$^5$: **C07F 7/08**

(21) Application number: **87117094.0**

(22) Date of filing: **19.11.87**

## (54) Preparation of alkyl silanes.

(30) Priority: **24.02.87 US 17852**
**19.03.87 US 27897**

(43) Date of publication of application:
**31.08.88 Bulletin 88/35**

(45) Publication of the grant of the patent:
**22.01.92 Bulletin 92/04**

(84) Designated Contracting States:
**BE DE FR GB IT NL SE**

(56) References cited:
**FR-A- 1 270 914**
**FR-A- 1 429 549**
**US-A- 4 367 343**

(73) Proprietor: **ETHYL CORPORATION**
**Ethyl Tower 451 Florida Boulevard**
**Baton Rouge Louisiana 70801(US)**

(72) Inventor: **Nelson, Gunner Elwood**
**12646 Lockhaven Avenue**
**Baton Rouge Louisiana 70815(US)**

(74) Representative: **Schwabe - Sandmair - Marx**
**Stuntzstrasse 16**
**W-8000 München 80(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 279 917 B1

## Description

This invention relates to the preparation of tetraalkylsilanes by the reaction of alkali metal aluminum tetraalkyls (also known as alkali metal aluminates) with alkyl halosilanes or with a mixture of a trialkylaluminum and a silicon tetrahalide. The invention also pertains to use of the alkylsilane products as functional fluids.

Methods for the synthesis of tetraalkyl silanes include the reaction of alkyl magnesium halides or alkyl lithiums with halosilicon compounds; Tamborski et al U.S. 4,367,343, and Tamborski et al, Synthesis and Properties of Silahydrocarbons, A Class of Thermally Stable, Wide Liquid Range Fluids, Ind. Eng. Chem. Prod. Res. Dev. 22, 172-178 (1983).

British patent 825,987 to Kali-Chemie AG discloses the reaction of trialkyl aluminums with alkyl- or arylchlorosilanes.

Jenkner, British patent 900,132, (also to Kali-Chemie) pertains to the reaction of sodium aluminum tetraethyl with halosilanes, such as silicon tetrachloride, where the reactants are used in a ratio of 4 to 1.

Bakshi et al. U.S. 4,595,777 pertains to the process of reacting an alkylchlorosilane with a trialkylaluminum.

Giraitis et al, U.S. 3,398,171, relates to the reaction of organosilanes and mixed metal compounds $AMR_n$ wherein A is an alkali metal and M can be aluminum. The process is conducted at a reaction temperature of -20 °C. to +50 ° C. and uses a higher mole ratio of reactants than utilized in this invention (compare the paragraph bridging Columns 5 and 6 of the reference patent with the description of this invention given below).

This invention pertains to the preparation of tetraalkylsilanes, wherein one alkyl group is comparatively small and the other three are comparatively large. The small alkyl group has from one to four carbon atoms, while the three larger groups have from 8 to 14 carbon atoms each. These products are prepared by a process which comprises reacting an alkali metal aluminum tetraalkyl, $MAlR'_4$, with an alkyl trihalosilane, $RSiX_3$, or with a mixture of trialkylaluminum, $AlR_3$, and a silicon tetrahalide, $SiX_4$, wherein X is a halide group, preferably chloride, and R is the smaller alkyl group (one to about four carbons) preferably methyl. The process is conducted such that three moles of $MAlR'_4$ reactant combine with four moles of silicon compound used, i.e., alkyltrihalosilane or silicon tetrahalide. In order to assist the reaction through the effect of mass action, an excess of up to about one additional mole of $MAlR'_4$ can be utilized in the reaction mixture. For the process of this invention, one does not use a very large excess of $MAlR'_4$ reactant, since such excesses can cause the reaction to take a different course that for the purpose of this invention is not desired; cf. Jenkner, and Giraitis et al, supra.

The process of this invention has several key features. First, all alkyl groups in the metal aluminate reactant $MAlR'_4$ (except for those in the excess reactant employed) are utilized. Second, it is not necessary for purposes of economics to recycle alkyl aluminum values. Recycle of such compounds is very difficult (if not impossible) to accomplish at an acceptable cost, especially when the alkyl groups are of the preferred size for this invention ($C_8$-$C_{14}$). Third, when a trichlorosilane such as $CH_3SiCl_3$ or silicon tetrachloride is used as a reactant in the process of this invention, co-product $NaAlCl_4$ separates as a separate liquid phase. Fourth, this facilitates product workup. Fifth, the product of this invention is predominately the fully substituted product. Hence, the process of this invention is much more advantageous than the Bakshi method (U.S. 4,595,777 supra, in which a mixture of products occur.

Above it was stated that a key feature of this invention was the utilization of the alkyl groups in the MAlR'4 reactant. Perhaps this can be better understood if the process of this invention is contrasted with processes of the prior art. In this regard the process of Jenkner (British 900,132) can be depicted by the following equation:

(1) $4NaAl(C_2H_5)_4 + SiCl_4 \rightarrow 4Al(C_2H_5)_3 + 4NaCl + Si(C_2H_5)_4$

As can be seen, most of the alkyl groups in the product remain bonded to aluminum, hence the Jenkner process is not as efficient as applicants for transferring alkyl groups from aluminum to silicon. Also, a pertinent aspect of the Giraitis et al process can be represented by the following equation:

(2) $3NaAlR'_4 + RSiCl_3 \rightarrow RSiR'_3 + 3NaCl + 3AlR'_3$

Here again, most of the alkyl groups in the product mixture remain bonded to aluminum. Therefore, these prior art processes are much less efficient than the process of this invention. Therefore, the process of this invention represents a decided improvement in the art.

In the alkali metal aluminum tetraalkyls ($MAlR'_4$) used as reactants in the process of this invention, the organic radicals need not be the same. To prepare a reactant with dissimilar groups, one may react, for example, a metal aluminum hydride such as $NaAlH_4$ or $LiAlH_4$ with a mixture of olefins (such as a mixture of octene-1 and decene-1). This reaction may be conducted in accordance with the general procedure for preparing $MAlR'_4$ starting materials given below. Alternatively, one may use in the process of this invention a mixture of two or more metal aluminates wherein each one is prepared from a single olefin. Hence, in this invention there can be used, for example, a mixture of two aluminates such as $NaAl(C_8H_{17})_4$ and $NaAl(C_{10}H_{21})_4$. The ability to use a mixture of alkyl radicals as exemplified above is important, since a mixture can be chosen to produce a silane product with desired physical properties.

In many instances where a mixture of alkyl groups occurs within the metal aluminate starting material, the products obtained by the process of this invention are substantially in the calculated statistical ratios. For example, reaction of $CH_3SiCl_3$ with $NaAl(C_8H_{17})_2(C_{10}H_{21})_2$ yields a mixture of products, $CH_3Si(C_8H_{17})_3$, $CH_3Si(C_8H_{17})_2(C_{10}H_{21})$, $CH_3Si(C_8H_{17})(C_{10}H_{21})_2$, and $CH_3Si(C_{10}H_{21})_3$ in a relative mole quantity that approximates 0.125, 0.375, 0.375, 0.125, as predicted for random distribution.

Products of this invention are useful as functional fluids with such diverse suggested uses as engine lubrication, electrical insulation, and heat transfer media. They can also be used as hydraulic fluids. The products of this invention are particularly useful under high temperature conditions where petroleum-based or synthetic hydrocarbon-based fluids cannot meet specifications. Product mixtures can be made to achieve desired rheological properties.

In a highly preferred embodiment this invention comprises a process for the preparation of a tetralkylsilane,

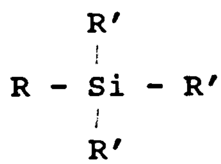

wherein R and R′ represent alkyl radicals such that R has up to 4 carbon atoms, and the radicals represented by R′ are alike or different and have from 8 to 14 carbon atoms; said process comprising reacting (a) an alkali metal aluminum tetraalkyl $MAlR'_4$, wherein M is Li, Na or K, and the radicals represented by R′ are alike or different, and (b) a trihaloalkyl silane having the formula $RSiX_3$, wherein X is a halide radical, preferably selected from fluoride, chloride and bromide radicals, said process being conducted such that the mole ratio of reactant (a) to reactant (b) is substantially 0.75 to 1, to 1.0 to 1.0 (i.e., for each mole of alkali metal aluminum tetraalkyl there is 1 to 1-1/3 moles of a trihaloalkyl silane.)

As stated above, the process of this invention comprises a reaction of an alkali metal aluminate, $MAlR'_4$. Lithium, sodium and potassium aluminates can be used, with the lithium and sodium compounds being preferred. The sodium aluminates are highly preferred for reasons of economics and availability. Preferably, each radical indicated by R′ in the formula $MAlR'_4$ is a hydrocarbyl, straight chain alkyl radical of 8 to 14 carbon atoms; however, it is to be understood that the radicals need not be limited to this structural configuration, and the size of the radicals can be larger or smaller than those within the preferred range.

The radicals of the preferred configuration and size appear to yield the more useful products, and they are preferred for that reason. However, any metal aluminate $MAlR'_4$ can be used for the process of this invention, so long as the radicals depicted by R′ are stable under the reaction conditions employed, do not form an untoward amount of undesirable co-product when subjected to the reaction conditions employed, or unduly retard the reaction because of steric hindrance.

As mentioned above, the metal aluminate reactant may contain one or more groups indicated by R′. Alternatively, a mixture of metal aluminates can be used. The metal aluminate or aluminates need not be pure; for example, an aluminate can be used in the reaction mixture in which it is formed. Thus for example, Na, Al, and $H_2$ can be reacted in a hydrocarbon to form $NaAlH_4$ and the unisolated $NaAlH_4$ can be reacted with an olefin, such as octene-1, or a mixture of olefins, such as octene-1 and decene-1 in a mole ratio of 2 to 1, and the resultant reaction mixture used as a reactant in the process of this invention. When the reactant is formed in this way, the olefin is generally used in excess. Consequently, the reactant mixture used in the instant process can frequently contain an olefin, or mixture of olefins.

Most olefins available in large commercial quantities are made from natural products or by chain growth of ethylene. In either case, the olefin usually has an even number of carbon atoms. However, it is to be

understood that an even number of carbon atoms is not critical, and $MAlR'_4$ reactants with one or more R′ radicals having an odd number of carbon atoms can also be used in this invention. Nevertheless, because of the more ready availability of even numbered olefins, the preferred $MAlR'_4$ reactants for this invention have alkyl radicals (depicted by R′) that are derived from one or more of the following olefins:

octene-1
decene-1
dodecene-1
tetradecene-1
hexadecene-1

The other reactants employed in this invention are either an alkyl trihalosilane, $RSiX_3$ or a mixture of a trialkyl aluminum, $AlR_3$, and a silicon tetrahalide, $SiX_4$ in which R is a lower alkyl radical such as methyl, ethyl, propyl, butyl, isopropyl, sec-butyl or the like. Preferably, R is unbranched. More preferably, R is methyl. The groups indicated by $\overline{X}$ are halide radicals; preferably all are the same. Preferably, the halide groups are chloro or bromo radicals, most preferably they are all chloro groups.

The process of this invention is conducted using a temperature that is high enough to cause the reaction to take place at a reasonable rate, but not so high that it causes an undesirable amount of side reaction or decomposition to occur. Generally speaking, a temperature above 150° C. and below 230° C. is used. Preferably, the temperature is from 180° C. to 200° C.

The reaction time is not a truly independent variable but depends at least to some extent on the other reaction conditions employed such as the reaction temperature. Generally speaking, reaction is essentially complete in from 3 to 10 hours with 5 to 6 hours being typical.

The reaction pressure does not have a large effect on the course of the reaction. Atmospheric, sub-atmospheric and super atmospheric pressure can be used. Atmospheric pressure or the autogenous pressure of the system are preferred.

Although the process of this invention is preferably conducted using alkali metal aluminates, $MAlR'_4$, such as described above, it is to be borne in mind that similar reactants can also be used in this invention in substantially the same way, to produce substantially the same results. Thus for example, one may use alkaline earth aluminates, $M'(AlR'_4)_2$, wherein M′ is Mg, Ca or Ba. When these materials are used in the process of this invention, one-half of the molar quantities described above for $MAlR'_4$ reactants are employed, since each molecule of the alkaline earth compounds contains two, i.e. twice, as many $(AlR'_4)$ groups. One may use as a reactant a compound having the formula $R''SiX_3$ wherein R″ is an alkyl group that has 5 or more carbon atoms.

The starting material, tetraalkylaluminate, can be prepared by known methods. Lithium aluminum hydride, for example, reacts with olefins at about 110° -120° C. forming complexes with the structure $LiAlR_4$ Sodium aluminum hydride will not add to olefins even at 180° C. without the presence of catalytic amounts of a material selected from trialkyl aluminums, dialkyl aluminum hydrides, lithium aluminum hydride, or aluminum, zinc or lithium halide. The first three hydrogens are readily replaced at 80° -130° C., but the fourth requires a temperature of 170° -230° C. or thereabouts, for 3 to 6 hours. The process is preferentially conducted in the presence of an excess of olefin, e.g. a 1:8 mole ratio of $NaAlH_4$ to olefin, and 5-15 mole % (based on $NaAlH_4$) of the catalyst. A parafin diluent can be used in the reaction mixture.

As an illustration of the preparation of $NaAlR'_4$, a reactor is charged with $NaAlH_4$, catalyst, and olefin in the above-defined relative amounts and heated for 1-2 hours at 125° C., followed by 3-4 hours at 175° C. (It is believed the duration of the heating cycle can be reduced somewhat.) The product is discharged after cooling. The final product typically contains 30-65% of $NaAlR_4$, and is suitable for most reactions. It is not necessary that the aluminate be employed in the product mix; if desired it can be isolated from some or all of the other substances present in the resultant reaction mixture.

When using an alkyl halosilane as one of the starting materials, a reaction mixture is prepared by admixing a sodium aluminum tetraalkyl solution prepared as above, and methyl trichlorosilane, for example. The mole ratio of contained NaAlR′4 to $CH_3SiCl_3$ is equal to or substantially equal to 0.75 to 1.0 to 1.0 to 1.0. The reaction mass is heated to about 190 ° C. for 2-6 hours, with efficient stirring.

When using trialkyl aluminum as a starting material a sodium aluminate ($NaAlR'_4$) solution is first added to a suitable reaction vessel and then is added an aluminum trialkyl, $R_3Al$. (There is some evidence that these materials can interact at least to some extent in a manner illustrated by the following equation. In the equation, Et represents the ethyl radical and R′ represents a dissimilar alkyl group; i.e. one having about 8-14 carbons.

(3) $4Et_3Al + 3NaAlR'_4 \dashrightarrow 3NaAlEt_4 + 4R'_3Al$

Partial, rather than the full exchange of the alkyl groups depicted by the equation, may also occur.)

To the mixture formed by intermixing the $R_3Al$ and $NaAlR'_4$ reactants is added the $SiX_4$ reactant, e.g. $SiCl_4$ The mole ratio of reactants is within the ranges given below

$SiX_4$ 1.0 mole

$NaAlR'_4$ 0.75-1.0 mole

$R_3Al$ 0.33-0.50 mole.

Preferably, the ratio of the combination of aluminum containing reactants to the silicon tetrahalide is within the range of 1.0 (aluminum reactants) to 1.0 ($SiX_4$) to 1.25 (aluminum reactants) to 1.0($SiX_4$) In other words the Al/Si ratio preferably is from equimolar to a 25% excess of aluminum. The reaction mass is heated to about 190 °C. for 2-6 hours, with efficient stirring.

Product workup is conducted as follows:

When an alkyl halosilane was used, sodium aluminum hydride is added (to reduce any unreacted $CH_3SiCl_3$ to $CH_3SiH_3$) and the resultant mixture stirred for about 3 hours at room temperature. In this step, any $CH_3SiH_3$ formed is evolved as a gas.

The mixture is then hydrolyzed with 3N HCl to remove any hydride remaining. The organic phase (which contains the product) is separated and dried. The products of this invention may contain, in addition to the desired tetraalkyl silane, some olefin dimer and/or some $RSiR'_2H$ by-product.

The above-described product workup can be conducted by two related, alternative procedures. As described above, the entire reaction product can be utilized in the workup. This method is convenient for small scale, laboratory preparations. Alternatively, before product workup, the $NaAlCl_4$ (or analogous co-product) can be separated from the organic layer. In this alternative method, the workup procedure is conducted on the organic fraction after separation of the inorganic co-product. Preferably, the inorganic co-product is removed as a liquid while it is in a molten state.

Example 1

This reaction was conducted in substantial accordance with the general procedure set forth above when using an alkyl halosilane as a starting material. There was used, 45.6 millimoles of sodium aluminum tetraoctyl and 57.3 millimoles of methyl trichlorosilane (mole ratio 0.80 to 1.0). The aluminum compound was in a 35% solution in octene-1. The reaction temperature and time were 190 °C. and 5 hours. The product mixture was treated with lu millimoles of sodium aluminum hydride (in 4 milliliters of dimethoxyethane solution) and stirred for three hours at room temperature. The product yield by gas chromatographic (GC) analysis was:

$CH_3Si(C_8H_{17})_2H$ 5.5%

$CH_3Si(C_8H_{17})_3$ 77.1%, 75.7%

The average of the duplicate analysis reported above is 76.4%. These results are based on silicon charged.

This yield and product composition compares very favorably to a reaction conducted at 190 °C. for 2 hours using 37.2 mmoles of $NaAl(C_8H_{17})_4$ and 36.2 millimoles of $CH_3SiCl_3$; mole ratio 1.03 to 1. In that instance the product yield by GC was as follows:

| | |
|---|---|
| $CH_3Si(C_8H_{17})_3$ | 42.5% |
| $CH_3Si(C_8H_{17})_2H$ | 37.0% |
| $CH_3Si(C_8H_{17})H_2$ | 12.1% |
| | 91.6% closure on Si |

The process of this example can be extended to the use of lithium and potassium aluminum tetraalkyls in which the alkyl groups are octyl, decyl, dodecyl or tetradecyl. Such substances may be reacted with methyl, ethyl, n-propyl, isopropyl, or n-butyl trichlorosilane or the trifluoro or tribromo analogs of these substances. The reaction can be conducted at exogenous pressure or at pressures of up to 500 psi or higher, imposed by use of an inert gas atmosphere, e.g. nitrogen or argon. The reactions can be conducted at 180 °C. to 230 °C. for 3 to 10 hours. The mole ratio of metal aluminate to trihalosilane is in the range of about (0.75-1.0) to 1.0.

Example 2

This procedure was conducted in general accordance with the procedure described above using 43.1 millimoles of $NaAl(C_8H_{17})_4$, 42.3 millimoles of KCl, and 40.4 millimoles of $CH_3SiCl_3$. The aluminum

compound was used as a 45.3% solution in octene-1, and the mole ratio of the aluminate to halosilane was (43.1/40.4), i.e. 1.07 to 1. The reactants were contacted at 190 °C. for 5 hours. The product mixture was hydrolyzed with 50 mL of 3N HCl, washed with 50 mL of 3N HCl, and then 50 mL of $H_2O$. The organic liquid was dried and evaporated to 59.3 grams.

Analysis (GC) indicated a 102% yield of $CH_3Si(C_8H_{17})_3$ was obtained. Although the analysis obviously comprised some analytical difficulty, the process of this example is an indication that the method of this invention can be conducted in the presence of a metal halide. Later work substantiated this, but also indicated that metal halides do not substantially enhance the process of this invention. In fact as shown below, their presence may be deleterious.

Example 3

An 89.6% yield of $CH_3Si(C_8H_{17})_3$ was obtained by reacting 81.9 millimoles of sodium aluminum tetraoctyl as a 40% solution in octene-1 with 79.7 millimoles of $CH_3SiCl_3$ Heating the reaction mixture was conducted while stirring; 100 °C. for 1 hour and then at 190°C. for 5 hours. The reaction procedure and product workup were in general accordance with the previous description.

In another run, a 92.5% yield of $CH_3Si(C_8H_{17})_3$ was obtained by reacting 60 millimoles of crude $NaAl(C_8H_{17})_4$ with 58 millimoles of $CH_3SiCl_3$ by stirring and heating at 100° -125° C. for 1 hour, followed by 5 hours at 190°C.

The product workup was in the usual manner. A black scum was noted at the interface of the organic and inorganic phases. The black scum is believed to be titanium. Titanium was present in the aluminum that was reacted with sodium and hydrogen to form the $NaAlH_4$, which in turn was reacted without purification or isolation to produce the $NaAl(C_8H_{17})_4$ reactant that was used in this experiment. The results indicate that workup of the $NaAlH_4$ intermediate, or the $NaAlR'_4$ reactant produced therefrom, is not required. Stated another way, good results are obtained when isolation techniques are not used to isolate the $NaAlH_4$ precursor, or the $NaAlR'_4$ reactant from other substances present in the reaction mixtures in which they are produced.

Example 4

A mixture of 63.9 millimoles of $NaAl(C_8H_{17})_2(C_{10}H_{21})_2$ and 61.2 millimoles of $CH_3SiCl_3$ was reacted in a manner similar to the general procedure described above. The product contained a mixture of the following:

| | Millimoles |
|---|---|
| $CH_3Si(C_8H_{17})_3$ | 5.38 |
| $CH_3Si(C_8H_{17})_2(C_{10}H_{21})$ | 17.11 |
| $CH_3Si(C_8H_{17})(C_{10}H_{21})_2$ | 17.11 |
| $CH_3Si(C_{10}H_{21})_3$ | 5.81 |

Total yield was 74.2%.

In another reaction, a mixture of 48.3 millimoles of $NaAl(C_8H_{17})_2(C_{10}H_{21})_2$ and 62.7 millimoles of $CH_3SiCl_3$ (mole ratio 0.77 to 1.0) was reacted similarly to above. The product distribution had essentially the same pattern, total yield, 81.6%. It was noted that less olefin dimerization occurred when the relative amount of $NaAlR^1{}_2R^2{}_2$ was reduced (from 1/2.2 to 1/6 dimer to product by weight.

In a third reaction, the above procedure was repeated using 51.6 millimoles of sodium aluminum tetraoctyl and 66.8 millimoles of $CH_3SiCl_3$; (mole ratio 0.77 to 1.0) and 53.3 millimoles of KCl. Stirring was conducted while the reaction was heated at 120°C. for 1 hour and at 190°C. for 5 hours. During the process, heavy solid deposition occurred making the stirring ineffective.

Results were as follows:

| | Yield |
|---|---|
| $CH_3Si(C_8H_{17})H_2$ | 33% |
| $CH_3Si(C_8H_{17})_2H$ | 30.5% |
| $CH_3Si(C_8H_{17})_3$ | 11.6% |

This result indicates that the reactants must be well contacted by efficient stirring, or by some other means.

In a fourth reaction, an 81.2% total yield of $NaAlR_4$ was prepared by reacting 41.8 millimoles of $NaAl(C_{10}H_{21})_4$, 43.0 millimoles of $NaAl(C_8H_{17})_4$ and 104 millimoles of $CH_3SiCl_3$. The Al/Si ratio was 0.815. Reaction in the usual manner was conducted (1 hour at 125° C. followed by 5 hours at 190° C.). The product mix was as follows:

| | Mole % |
|---|---|
| $CH_3Si(C_8H_{17})_3$ | 14.2 |
| $CH_3Si(C_8H_{17})_2(C_{10}H_{21})$ | 37.7 |
| $CH_3Si(C_8H_{17})(C_{10}H_{21})_2$ | 37.7 |
| $CH_3Si(C_{10}H_{21})_3$ | 12.5 |

This distribution is about the same as noted for reactions previously described above. Thus, the product distribution appears to be substantially insensitive to aluminate composition and to Al/Si ratios over the (0.75 to 1.0) to (1.0 to 1.0) range.

Example 5

Following the general procedure noted above, the following were reacted for 1 hour at 125° C. and then 5 hours at 190° C.:

32.6 millimoles $NaAl(C_{10}H_{21})_4$
65.0 millimoles $NaAl(C_8H_{17})_4$
100.0 millimoles $CH_3SiCl_3$

The $C_8$ to $C_{10}$ mole ratio was about 2 to 1.

The product yield was 87.45% and had the following distribution:

| | Millimoles |
|---|---|
| $CH_3Si(C_8H_{17})_3$ | 26.91 |
| $CH_3Si(C_8H_{17})_2(C_{10}H_{21})$ | 38.46 |
| $CH_3Si(C_8H_{17})(C_{10}H_{21})_2$ | 18.85 |
| $CH_3Si(C_{10}H_{21})_3$ | 3.23 |

The olefin dimer to product ratio was 1/6.

In another run, when 48.7 millimoles of $NaAl(C_{10}H_{21})_4$ and 80.2 millimoles of $NaAl(C_8H_{17})_4$ were reacted with 160.5 millimoles of $CH_3SiCl_3$, the product distribution was:

| | Mole % |
|---|---|
| $CH_3Si(C_8H_{17})_3$ | 25.0 |
| $CH_3Si(C_8H_{17})_2(C_{10}H_{21})$ | 43.3 |
| $CH_3Si(C_8H_{17})(C_{10}H_{21})_2$ | 25.9 |
| $CH_3Si(C_{10}H_{21})_3$ | 5.8 |

Example 6

A reaction vessel was charged with a mixture of:

33.86 millimoles of $NaAl(C_8H_{17})_2(C_{10}H_{21})_2$

15.0 millimoles of triethylaluminum, and
45.16 millimoles of $SiCl_4$.
The resultant mixture was reacted by stirring at 190° C. for five hours. Gas chromatography showed there were numerous products. Products having the formula $(C_2H_5)Si(C_8H_{17})_m(C_{10}H_{21})_{3-m}$ were noted along with lighter and heavier components.

Example 7

To a suitable reaction vessel was charged:
37.5 millimoles of sodium aluminum tetraoctyl in an octene-1 solution
20.0 millimoles of triethylaluminum (TEA), and
50.0 millimoles of $SiCl_4$.
(This mixture represents about a 20% molar excess of TEA calculated as follows, using 16.7 millimoles as the amount theoretically required to have the mole ration of TEA to $SiCl_4$ be 0.33 to 1.0).

$$\frac{20 - 16.7}{16.7} = 19.8\%$$

The mole ratio of the metal aluminate to $SiCl_4$ is 37.5/50 or (0.75 to 1.0)

The reaction was conducted with stirring for five hours at 190° C. Gas chromatographic/mass spectrophotometric (GC/MS) analysis indicated that the following were present in the reaction mixture:

| PRODUCT | |
|---|---|
| Compound | Area % |
| $(C_2H_5)_3Si(C_8H_{17})$ | 6.1 |
| $C_8$ dimer | 6.0 |
| $(C_2H_5)_2Si(C_8H_{17})_2$ | 17.77 |
| $(C_2H_5)Si(C_8H_{17})_3$ | 28.35 |
| $Si(C_8H_{17})_4$ | 20.14 |
| unidentified products | 3.1 |

(Heptane was used as the solvent when the flash stripped product was submitted for GC/MS.)

The total weight of product after final strip was 17.8 g. Assuming that the product had an average molecular weight of 396, i.e. the molecular weight of $(C_2H_5)Si(C_8H_{17})_3$, this represents a yield of 90.8%.

Example 8

To a suitable reaction vessel was charged:

| | |
|---|---|
| 79 millimoles | $NaAl(C_8H_{17})_4$ |
| 33 millimoles | $(C_2H_5)_3Al$ |
| 33 millimoles | NaCl |
| 94.8 millimoles | $SiCl_4$ |

In this reaction mixture there was an excess of aluminum reactants calculated as follows:

(A) <u>Mole % excess $NaAl(C_8H_{17})_4$</u>

$$94.8 \times 3/4 = 71.1 \text{ millimoles } NaAl(C_8H_{17})_4$$

$$(79 - 71.1) \div 71.1 = \underline{\underline{11.1 \text{ mole}}} \text{ \% excess}$$

(B) <u>Mole % excess $(C_2H_5)_3Al$</u>

$$94.8 \times 1/3 = 31.6 \text{ millimoles } (C_2H_5)_3Al$$

$$(33 - 31.6) \div 31.6 = \underline{\underline{4.4 \text{ mole}}} \text{ \% excess}$$

Assuming the molecular weight of product was 396, the overall yield was 73%. Analysis by GC/MS gave the results in the table below. In the table, the analysis is compared with analytical results obtained on the product mixture obtained by the process of Example 7.

| Compound | Example 3 Mole % | Example 2 Mole % |
|---|---|---|
| $(C_2H_5)_3Si(C_8H_{17})$ | 10.4 | 13.3 |
| $(C_2H_5)_2Si(C_8H_{17})_2$ | 24.3 | 28.7 |
| $(C_2H_5)Si(C_8H_{17})_3$ | 46.9 | 36.6 |
| $Si(C_8H_{17})_4$ | 18.4 | 21.3 |
| | 100.0 | 99.9 |

The comparison indicates that NaCl favors production of $(C_2H_5)\ Si(C_8H_{17})_3$.

The reaction mixture of this Example 8 was subjected to a vacuum strip using a bath temperature of 190° C., at 0.5 mm Hg until substantially all light materials were removed. The isolated product weighed 25.4 grams and had the following composition. In the following table, the product fixture is compared with that obtained upon vacuum strip of the Example 7 product. The vacuum operation for that product involved conditions similar to those mentioned above.

| VACUUM STRIPPED PRODUCT | | |
|---|---|---|
| Compound | Example 3 Mole % | Example 2 Mole % |
| $(C_2H_5)_3Si(C_8H_{17})$ | 0.0 | 5.1 |
| $(C_2H_5)_2Si(C_8H_{17})_2$ | 26.4 | 30.6 |
| $(C_2H_5)_2Si(C_8H_{17})_3$ | 52.7 | 40.3 |
| $Si(C_8H_{17})_4$ | 20.8 | 24.0 |
| | 99.9 | 100.0 |

The process of this example can be repeated using a reaction temperature of from about 150° C. to about 230° C. and a reaction time of three to ten hours. It can be repeated using trimethylaluminum, tri-n-propylaluminum or tri-n-butylaluminum in place of the triethylaluminum. These substances can be substituted in the above example in a ratio of 0.33 to 0.50 mole, per each 1.0 mole of $SiX_4$ reactant. The corresponding methyl-, propyl-, or butyl- products are obtained. The process of the above example can also be repeated using as the $NaAlR'_4$ reactant, the compounds wherein each of the four R' radicals are decyl, dodecyl, or tetradecyl, and the mole ratio of $NaAlR'_4$ reactant to $SiCl_4$ is from (0.75 to 1.0) to (1.0 to 1.0). The corresponding products are obtained. In the process of the above example, $SiF_4$ or $SiBr_4$ can be substituted for the $SiCl_4$ employed. The process can also be repeated using NaF or NaBr instead of the NaCl employed.

<u>Example 9</u>

The following change was added to a suitable reaction vessel:

| Compound | Millimoles |
|---|---|
| $NaAl(C_8H_{17})_4$ | 43.6 |
| $NaAl(C_{10}H_{21})_2$ | 10.9 |
| $(C_2H_5)_3Al$ | 25.7 |
| NaCl | 60.0 |
| $SiCl_4$ | 68.5 |
| nonane | ~30.0 |

This mixture was reacted with stirring at 190° C. It was then hydrolyzed with 50 mL 3N HCl, and then washed successively with 50 mL portions of 3N HCl and $H_2O$. The washed product was dried over anhydrous $K_2CO_3$. Gas chromatography showed the product mixture to be a typical $Et_{0-2}$ $SiOct_{0-4}$ $Dec_{0-4}$ product (Et = Ethyl, Oct = octyl, Dec = decyl).

The residue after the vacuum strip weighed 19.6 grams. Assuming an average molecular weight of 412.8 $(Et)Si(Oct)_{2.4}$ $(Dec)_{0.6})$ the yield was 69.2% based on $SiCl_4$.

Example 10

A suitable reaction vessel was charged with:

| Compound | Millimoles |
|---|---|
| $NaAl(C_8H_{17})_4$ | 50.56 |
| $NaAl(C_{10}H_{21})_2$ | 10.11 |
| $(C_2H_5)_3Al$ | 27.8 |
| NaCl | ~40.0 |
| $SiCl_4$ | 75.8 |

The two sodium aluminates were added as 35% solutions in the corresponding olefin. The reaction mass was heated at 190° C. for five hours with stirring. The reaction vessel was rinsed with heptane to aid in removal of the crude product mixture. The mixture was hydrolyzed with 3N HCl, then washed with two 125 mL portions of 3N HCl and finally with two 300 mL portions of $H_2O$. The resultant mixture was then dried over $MgSO_4$. After filtration, it was stripped under vacuum. Final strip conditions were 0.5 mm and 190° C. The reaction mixture weighed 26.6 grams. Analysis by GC indicated the following:

| Product | Area % |
|---|---|
| $(C_2H_5)_2Si(C_8H_{17})_2$ | 8.78 |
| $(C_2H_5)_2Si(C_8H_{17})(C_{10}H_{21})$ | 5.89 |
| $(C_2H_5)_2Si(C_{10}H_{21})_2$ | 2.24 |
| $(C_2H_5)Si(C_8H_{17})_3$ | 21.77 |
| $(C_2H_5)Si(C_8H_{17})_2(C_{10}H_{21})$ | 13.71 |
| $(C_2H_5)Si(C_8H_{17})(C_{10}H_{21})_2$ | 2.94 |
| $(C_8H_{17})_4Si$ | 15.64 |
| $(C_8H_{17})_3Si(C_{10}H_{21})$ | 12.19 |
| $(C_8H_{17})_2Si(C_{10}H_{21})_2$ | 3.70 |
| Heavies | 2.94 |
| | 89.80 |

The products of this invention are useful as functional fluids. For example, samples of materials of this invention were prepared by the procedure of Example 5, such that the $C_8$ to $C_{10}$ mole ratio was as indicated in the left hand column in the following table. The viscosity measurements reported in the table were obtained on the products. The results indicate that at least two of the three silacarbon mixtures compare favorably with U.S. Air Force synthetic lube specifications:

**Viscosity of $CH_3Si(Octyl)_n(Decyl)_{3-n}$ Preparations**

| | Centistokes | | |
|---|---|---|---|
| | -54°C. | 38°C. | 204.0 C. |
| Air Force Specification | 2500 max | 9.5 min | 0.9 min |
| **Preparations** | | | |
| $C_8/C_{10}$ mole ratios | | | |
| 2/1 | 2160 | 9.55 | 0.92 |
| 1.6/1 | 2290 | 9.90 | 0.93 |
| 1/1 | 2560 | 10.4 | 0.97 |

Also the vacuumed stripped products of Examples 6, 7 and 10 were submitted for viscosity measurements. The values obtained are reported in the following table. The results indicate that the two silahydrocarbon mixtures approximate U.S. Air Force synthetic lube specifications:

| Preparations | | | |
|---|---|---|---|
| Example 6 | 1770 | 8.12 | 0.826 |
| Example 7 | 2000 | 8.94 | 0.866 |
| Example 10 | 2510 | 11.0 | 0.96 |

Products of this invention are useful as hydraulic fluids for military or other applications. Hydraulic fluids are used in hydraulic systems to transmit pressure or energy. They also serve to reduce friction in bearings and between sliding surfaces in pumps and similar articles. Hydraulic and other functional fluids also protect surfaces from rusting, and can remove undesirable particulate matter away from surfaces.

Like other functional fluid base stocks, the silahydrocarbons produced by the process of this invention can be admixed with additives such as rust inhibitors, antiwear agents, corrosion inhibitors and the like.

## Claims

1. A process for the preparation of a tetralkylsilane having the formula:

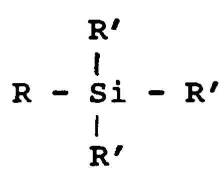

wherein R and R′ are alkyl radicals and the radicals R′ are alike or different, R has up to about 4 carbon atoms, and each radical designated by R′ has from 8 to 14 carbon atoms; said process characterized by reacting an alkali metal aluminum tetraalkyl having the formula $MAlR'_4$, wherein M is lithium, sodium, or potassium, and R′ has the same significance as above, with

(a) from 1 to 1-1/3 moles per mole of $MAlR'_4$ of an alkyltrihalosilane having the formula $RSiX_3$, or

(b) a mixture of a silicon tetrahalide, $SiX_4$ and a trialkyl aluminum, $R_3Al$ such that for each mole of $SiX_4$ there is present 1/3 mole $R_3Al$ and 3/4 mole $MAlR'_4$,

wherein X is a halide radical selected from fluoride, chloride and bromide, and R has the same significance as above, said process being conducted at a temperature of from 180°C. to 230°C.

2. A process as claimed in Claim 1 in which said alkali metal aluminum tetraalkyl has the formula $NaAlR'_4$ wherein the four alkyl radicals represented by R′ are the same.

3. A process as claimed in Claim 1 in which said alkali metal aluminum tetraalkyl is a sodium aluminum tetraalkyl and in which the R′ groups are $C_8$ and $C_{10}$ alkyl radicals and in which the mole ratio of $C_8$ to $C_{10}$ radicals is about 2:1.

4. A process as claimed in Claim 1 in which said alkyltrihalosilane is methyl trichlorosilane.

5. A process as claimed in Claim 1 in which said trialkyl aluminum is triethyl aluminum.

6. A process as claimed in Claim 1 in which said silicon tetrahalide is silicon tetrachloride.

**Revendications**

1. Procédé de préparation d'un tétraalkyl-silane de formule

$$\begin{array}{c} R' \\ | \\ R - Si - R' \\ | \\ R' \end{array}$$

dans laquelle R et R' sont des radicaux alkyle, et les radicaux R' sont identiques ou différents, R possède jusqu'à environ 4 atomes de carbone, et chaque radical représenté par R' possède de 8 à 14 atomes de carbone, procédé caractérisé en ce que l'on fait réagir un tétraalkyle d'aluminium et de métal alcalin de formule $MAlR'_4$, dans laquelle M représente le lithium, le sodium ou le potassium, et R' a la même signification que ci-dessus, avec

a) de 1 à 1-1/3 moles par mole de $MAlR'_4$, d'un alkyltrihalosilane de formule $RSiX_3$, ou

b) un mélange d'un tetrahalogénure de silicium, $SiX_4$ et d'un trialkyl aluminium, $R_3Al$ tel qu'il existe 1/3 mole de $R_3Al$ et 3/4 mole $MAlR'_4$ pour chaque mole de $SiX_4$,

où X est un radical halogénure choisi parmi fluorure, chlorure et bromure, et R a la même signification que ci-dessus, ce procédé étant conduit à une température de 180°C à 230°C.

2. Procédé selon la revendication 1, dans lequel le tétraalkyle d'aluminium et de métal alcalin a la formule $NaAlR'_4$ où les quatre radicaux alkyle représentés par R' sont identiques.

3. Procédé selon la revendication 1, dans lequel le tétraalkyle d'aluminium et de métal alcalin est un tétraalkyl-aluminium-sodium et dans lequel les groupes R' sont des radicaux alkyle en $C_8$ et $C_{10}$, et le rapport molaire des radicaux en $C_8$ aux radicaux en $C_{10}$ est d'environ 2:1.

4. Procédé selon la revendication 1, dans lequel l'alkyltrihalosilane est le méthyl trichlorosilane.

5. Procédé selon la revendication 1, dans lequel le trialkyl aluminium est le triéthyl aluminium.

6. Procédé selon la revendication 1, dans lequel le tétrahalogénure de silicium est du tétrachlorure de silicium.

**Patentansprüche**

1. Verfahren zur Herstellung eines Tetralkylsilans der Formel:

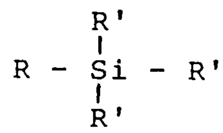

worin R und R' Alkylreste bedeuten und die Reste R' gleich oder verschieden sind, R bis zu etwa 4 Kohlenstoffatome hat und jeder als R' bezeichnete Rest 8 bis 14 Kohlenstoffatome hat, gekennzeichnet durch Umsetzung eines Alkalimetallaluminiumtetraalkyls der Formel $MAlR'_4$, worin M Lithium, Natrium oder Kalium bedeutet und R' die vorstehend genannte Bedeutung hat, mit

(a) von 1 bis 1-1/3 Mol pro Mol $MAlR'_4$ eines Alkyltrihalogensilans der Formel $RSiX_3$, oder
(b) einer Mischung eines Siliziumtetrahalogenids, $SiX_4$ und einem Trialkylaluminium, $R_3Al$ derart, daß für jedes Mol $SiX_4$ 1/3 Mol $R_3Al$ und 3/4 Mol $MAlR'_4$ vorhanden sind,

wobei X einen aus Fluorid, Chlorid und Bromid ausgewählten Halogenrest bedeutet, und R die vorstehend genannte Bedeutung hat, und daß das Verfahren bei einer Temperatur von 180 °C bis 230 °C durchgeführt wird.

**2.** Verfahren nach Anspruch 1, bei dem das Alkalimetallaluminiumtetraalkyl die Formel $NaAlR'_4$ hat, worin die durch R' repräsentierten vier Alkylreste gleich sind.

**3.** Verfahren nach Anspruch 1, bei dem das Alkalimetallaluminiumtetraalkyl ein Natriumaluminiumtetraalkyl ist und bei dem die R'-Gruppen $C_8$- und $C_{10}$-Alkylreste sind und bei dem das Molverhältnis von $C_8$ zu $C_{10}$-Resten etwa 2:1 beträgt.

**4.** Verfahren nach Anspruch 1, bei dem das Alkyltrihalogensilan Methyltrichlorsilan ist.

**5.** Verfahren nach Anspruch 1, bei dem das Trialkylaluminium Triethylaluminium ist.

**6.** Verfahren nach Anspruch 1, bei dem das Siliziumtetrahalogenid Siliziumtetrachlorid ist.